# EUROPEAN PATENT SPECIFICATION

(11) **EP 2 960 803 B1**
(45) Date of publication and mention of the grant of the patent: **30.01.2019**
(21) Application number: 13875896.6
(22) Date of filing: 04.12.2013
(51) Int. Cl.: G06F 13/00, H04W 84/18, H04L 29/08

(54) **DATA SHARING SYSTEM**
SYSTEM ZUR GEMEINSAMEN DATENNUTZUNG
SYSTÈME DE PARTAGE DE DONNÉES

(30) Priority: 22.02.2013 JP 2013032834
(43) Date of publication of application: 30.12.2015
(73) Proprietor: NEC Corporation, Tokyo 108-8001 (JP)
(72) Inventor: UEDA, Hirofumi, Tokyo 108-8001 (JP); FUJITA, Norihito, Tokyo 108-8001 (JP)
(74) Representative: MacDougall, Alan John Shaw
(86) International application number: PCT/JP2013/007111
(87) International publication number: WO 2014/128807

(56) References cited:
- EP-A1- 2 075 975
- JP-A- 2003 288 254
- JP-A- 2012 156 604
- US-A1- 2007 143 492
- US-A1- 2009 006 972
- US-A1- 2012 185 434

## Description

### [Technical Field]

The present invention relates to a data sharing system, a data sharing method, a communication terminal, and a program wherein data are shared between a plurality of communication terminals capable of wirelessly communicating with one another.

### [Background Art]

As a type of method wherein data are shared between a plurality of communication terminals, there is a method in which data are shared in a distributed manner by individual communication terminals without using a central management apparatus such as a server.

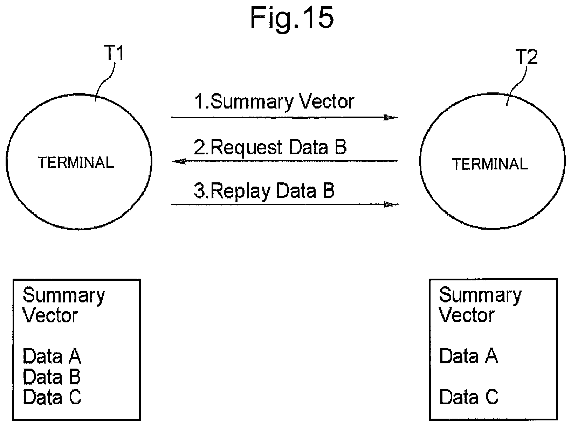

For example, exchange and synchronization of information held in each communication terminal by an epidemic method while communication terminals move close to one another have been proposed as a first related technology related to the present invention (refer to, for example, NPL 1). In an epidemic method, when a communication terminal in a network detects another communication terminal, the communication terminal and the other communication terminal exchange a holding list (also referred to as "summary vector") that lists information about data (content) held by each terminal, so that the communication terminal acquires the content of the holding list held in another communication terminal. The communication terminal checks for data that the own terminal does not hold, based on the received holding list, and attempts to acquire the data. For example, as illustrated in Fig. 15, a terminal T1 and a terminal T2 that have approached each other exchange holding lists with each other, and the terminal T2 checks for difference data by comparing the holding list of the own terminal and the holding list of the terminal T1 to determine whether there are any data that the own terminal does not hold. In the example illustrated in Fig. 15, the terminal T2 does not hold data B, therefore transmits an acquisition request for the data B to the terminal T1, and acquires the data B. All terminals within the network match information held in each terminal by repeating the operation.

Further, in order to solve a problem that frequent transmission of holding lists in information sharing by the epidemic method mentioned above leads to heavy bandwidth load, suppression of transmission of duplicating holding lists has been proposed as a second related technology related to the present invention (refer to, for example, PTL 1). More specifically, in the second related technology, a plurality of communication terminals are wirelessly connected to and communicating with one another without using an access point, so that data are shared between the plurality of communication terminals. Each communication terminal in the second related technology includes an internal deduction unit, a duplication determination unit, and an information exchange unit. The internal deduction unit deduces data that are presently held by another communication terminal by using a reception history of a holding list received from the other communication terminal. The duplication determination unit determines whether or not the data presently held by another communication terminal which has been deduced by the internal deduction unit match the data held by the own terminal. In case of the duplication determination unit determines that the data do not match, the information exchange unit transmits a holding list that contains the data held by the own terminal.

### [Citation List]

### [Patent Literature]

[PTL 1] WO2011/071045

### [Non Patent Literature]

[NPL 1]A. Vahdat, D. Becker, "Epidemic Routing for Partially-Connected Ad Hoc Networks," Tech. Report CS-200006, Duke University, Apr. 2000

US 2012/185434 A1 discloses data synchronisation methods that include the actions of receiving a knowledge vector from a first device of a pair of devices, the knowledge vector identifying data items and latest changes to the data items known to a peer device; comparing, at a second device of the pair of devices, the received knowledge vector with a local knowledge vector for changes unknown to the first device; and sending a list of changes to the first device.

US 2009/006972 A1 discloses a collaborative phone-based file exchange technique that wirelessly synchronises a user's work context with his or her mobile phone and makes this context readily available and sharable in collaborative situations. When the user is away from their desk, collaboration with others is possible by sharing/downloading between the mobile phone and a paired PC, which may be a colleague's computer or a meeting room workstation/computer. When the user returns to their office, any recently downloaded files are automatically synchronised back to their office PC.

US 2007/143492 A1 discloses a method in which a mobile device wirelessly detects another device that is proximate. The mobile device provides to the other device identifications of which content from a particular content source is stored by the mobile device. The mobile device provides to the other device content from the particular source that is stored by the mobile device but not the other device, and receives from the other device content from the particular source that is stored by the other device but not by the mobile device, so that upon conclusion of an interaction between the mobile device and the other device, each device comprises all of the content from the particular content source originally comprised *in toto* between the two devices.

### [Summary of Invention]

### [Technical Problem]

In the aforementioned first related technology, before data are transmitted and received between communication terminals, the communication terminals exchange the holding lists and each communication terminal acquires data that the own terminal does not hold from other communication terminals. Therefore, there is no unnecessary operation that data already held by another communication terminal or data not needed by the own communication terminal are transmitted or received between communication terminals. However, there is a problem that frequent transmission of holding lists causes heavier bandwidth load on a wireless link and impedes other communications. The second related technology is a technology that solves such a problem. However, since the second related technology is based on suppressing transmission of duplicating holding lists, it is difficult to suppress transmission of holding lists in a situation where there is no duplication between holding lists held by a plurality of communication terminals.

The present invention defines a communication terminal according to claim 1, a data sharing method according to claim 6 and a computer program according to claim 8. Further embodiments are set forth in the dependent claims 2-5 and 7.

### [Advantageous Effects of Invention]

The foregoing structure of the present invention enables suppression of increase in bandwidth load on a wireless link caused by frequent transmission of holding lists.

### [Brief Description of Drawings]

Fig. 1 is an overall configuration diagram of a data sharing system according to a first exemplary embodiment of the present invention.
Fig. 2 is a block diagram illustrating a configuration of a communication terminal included in the data sharing system according to the first exemplary embodiment of the present invention.
Fig. 3 is a flowchart illustrating a data sharing procedure in the data sharing system according to the first exemplary embodiment of the present invention.
Fig. 4 is a diagram illustrating an example of a data sharing scene in the data sharing system according to the first exemplary embodiment of the present invention.
Fig. 5 is a diagram illustrating another example of a data sharing scene in the data sharing system according to the first exemplary embodiment of the present invention.
Fig. 6 is an overall configuration diagram of a data sharing system according to a second exemplary embodiment of the present invention.
Fig. 7 is a block diagram illustrating a configuration of a communication terminal included in the data sharing system according to the second exemplary embodiment of the present invention.
Fig. 8 is a flowchart illustrating a data sharing procedure in the data sharing system according to the second exemplary embodiment of the present invention.
Fig. 9 is a block diagram of a data sharing system according to a third exemplary embodiment of the present invention.
Fig. 10 is a block diagram of a data sharing system according to a fourth exemplary embodiment of the present invention.
Fig. 11 is a block diagram of a data sharing system according to a fifth exemplary embodiment of the present invention.
Fig. 12 is an explanatory diagram of a data exchange method adopted in the data sharing system according to the fifth exemplary embodiment of the present invention.
Fig. 13 is an explanatory diagram of a data exchange operation in the data sharing system according to the fifth exemplary embodiment of the present invention.
Fig. 14 is a block diagram of a communication terminal included in a data sharing system according to a sixth exemplary embodiment of the present invention.
Fig. 15 is a diagram illustrating an example of a procedure of data sharing by an epidemic method.

### [Description of Embodiments]

Next, exemplary embodiments of the present invention will be described in detail with reference to the drawings.

### [First Exemplary Embodiment]

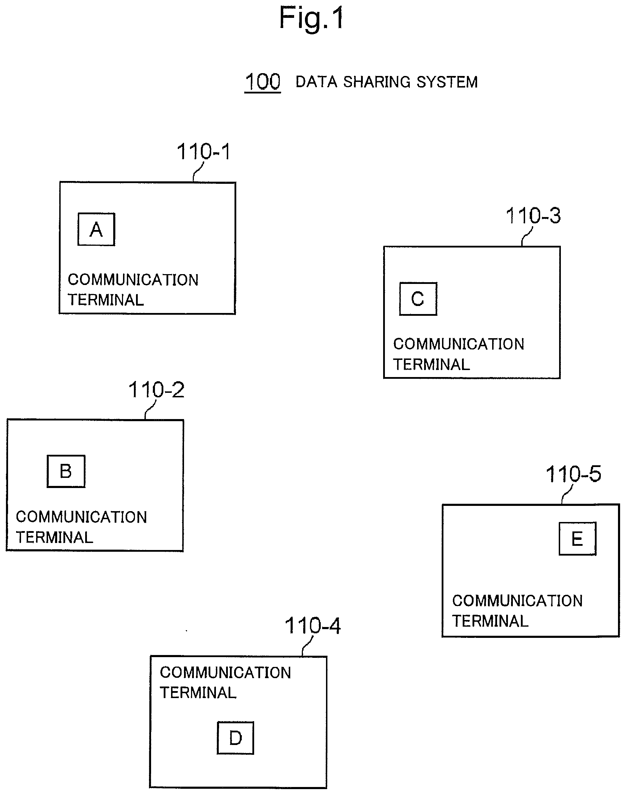

Referring to Fig. 1, a data sharing system 100 according to a first exemplary embodiment of the present invention includes a plurality of communication terminals 110 that are capable of wirelessly transmitting and receiving communication messages to and from one another. As for the individual communication terminals 110, all of the terminals may be mobile communication terminals, or some of the terminals may be mobile communication terminals and the others may be fixed terminals. Although in Fig. 1 only five communication terminals are drawn, the number of communication terminals may be four or less or may also be six or more.

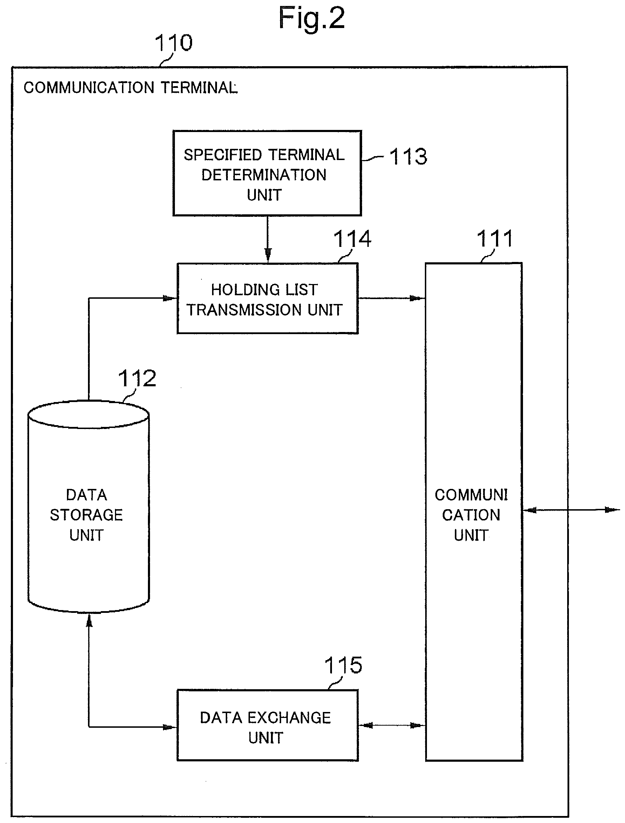

Fig. 2 illustrates a configuration example of a communication terminal 110. Referring to Fig. 2, the communication terminal 110 includes a communication unit 111, a data storage unit 112, a specified terminal determination unit 113, a holding list transmission unit 114, and a data exchange unit 115.

The communication unit 111 has a function of wirelessly transmitting and receiving communication messages to and from other communication terminals 110. Choice of communication method to be used by the communication unit 111 is arbitrary.

The data storage unit 112 stores one or more pieces of data. Choice of individual data is arbitrary. For example, the data may include any of text data, image data, and voice data, as well as mixture thereof. Further, the data may be what are called content.

The specified terminal determination unit 113 has a function of determining whether or not the own communication terminal 110 is a specified terminal. The specified terminal herein means a terminal authorized to transmit a holding list. Choice of function determining whether or not the own communication terminal 110 is a specified terminal may be arbitrary as long as the function is based on a method other than a method in which the own communication terminal 110 is always determined as a specified terminal.

The holding list transmission unit 114 has a function of transmitting a holding list that lists information about data stored in the data storage unit 112, to other communication terminals 110 through the communication unit 111. The information about data listed in the holding list is arbitrary as long as the information is capable of identifying the data, and, for example, the information may be a summary vector or may also be a data identifier. The holding list transmission unit 114 transmits a holding list only in case of the specified terminal determination unit 113 determines the own communication terminal 110 as a specified terminal, and does not transmit the holding list in case of the own communication terminal 110 is not a specified terminal. Transmission of a holding list is carried out, for example, in every fixed cycle.

The data exchange unit 115 has a function of receiving a holding list from another communication terminal 110 through the communication unit 111 and transmitting and receiving communication messages through the communication unit 111 with another communication terminal 110 having a holding list that does not match the holding list of the own communication terminal 110 so as to share data with each other. In case of providing data that another communication terminal 110 does not hold from the own communication terminal 110 to the other communication terminal 110 for data sharing, the data exchange unit 115 reads out the corresponding data from the data storage unit 112 and transmits the data to the other communication terminal 110 through use of a communication message. Further, in case of receiving data that the own communication terminal 110 does not hold through use of a communication message from the other communication terminal 110 for data sharing, the data exchange unit 115 stores the received data into the data storage unit 112.

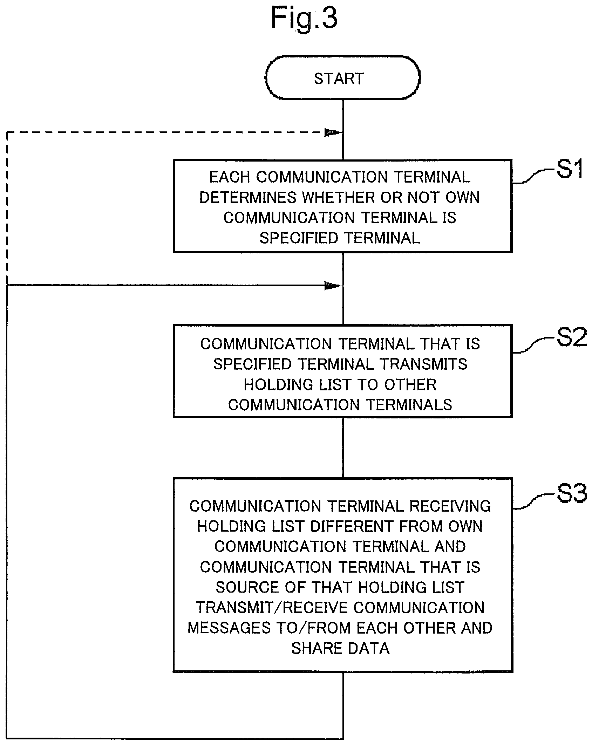

Next, an operation in which a plurality of communication terminals 110 in the data sharing system according to the present exemplary embodiment mutually share data held by individual terminals will be described with reference to a flowchart in Fig. 3.

In case of data sharing is performed in the data sharing system 100, first, each communication terminal 110 determines whether or not the own communication terminal is a specified terminal by using the specified terminal determination unit 113 (Step S1).

Next, a communication terminal 110 that determines that the own terminal is a specified terminal transmits, by using the holding list transmission unit 114, a holding list that lists data held by the own communication terminal to another communication terminal 110 through the communication unit 111 (Step S2).

Next, a communication terminal 110 that receives a holding list from another communication terminal 110 transmits and receives communication messages to and from another communication terminal 110 having a holding list that does not match the holding list of the own communication terminal through the communication unit 111 by using the data exchange unit 115, so as to share data with each other (Step S3).

Thereafter, the processing of the aforementioned steps S2 to S3 is repeatedly performed. Alternatively, the processing of the aforementioned steps S1 to S3 may be repeatedly performed.

By the operation described above, data can be shared between a plurality of communication terminals 110.

Hereinafter, the operation of the present exemplary embodiment will be more specifically described.

It is assumed that the plurality of communication terminals 110 illustrated in Fig. 1 hold respectively different data as indicated in Fig. 1. Specifically, it is assumed that the communication terminal 110-1 holds data A, the communication terminal 110-2 holds data B, the communication terminal 110-3 holds data C, the communication terminal 110-4 holds data D, and the communication terminal 110-5 holds data E as data to be shared with other communication terminals.

It is also assumed that in the processing of the step S1 in Fig. 3, the communication terminal 110-1 of the plurality of communication terminals 110 is determined as a specified terminal and the remaining communication terminals 110-2 to 110-5 are not determined as specified terminals. In this situation, in the step S2 in Fig. 3, only the communication terminal 110-1 transmits a holding list indicating that the communication terminal 110-1 holds the data A, to the other communication terminals 110.

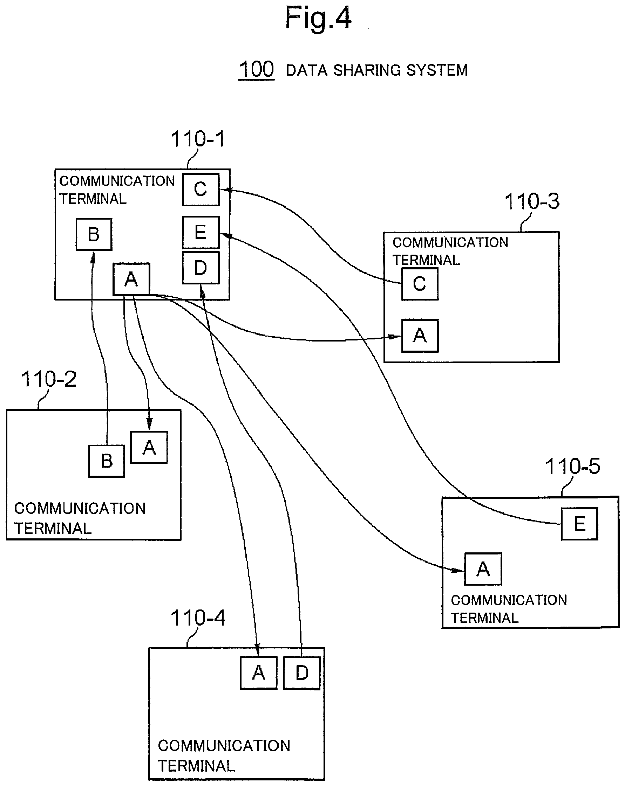

The communication terminals 110-2 to 110-5 compare the holding list received from the communication terminal 110-1 with the holding lists of the own communication terminals, and respectively detect differences. Consequently, in the step S3 in Fig. 3, each of the communication terminals 110-2 to 110-5 transmits and receives communication messages to and from the communication terminal 110-1 so as to share data with each other. As a result, as illustrated in Fig. 4, the communication terminal 110-1 acquires the data B to E not present in the own communication terminal from the communication terminals 110-2 to 110-5. Further, the communication terminals 110-2 to 110-5 acquire the data A not present in the own communication terminals from the communication terminal 110-1.

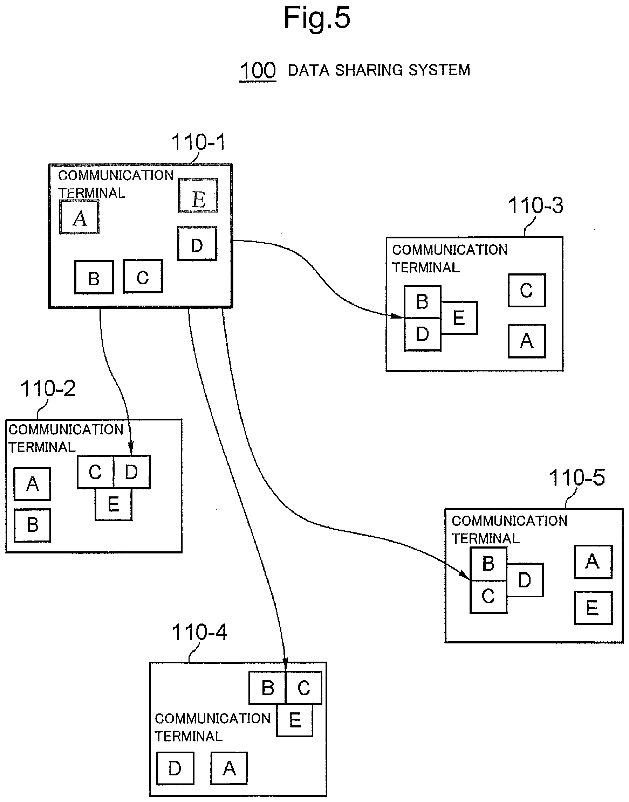

Thereafter, when the processing in the step S2 in Fig. 3 is performed again, only the communication terminal 110-1 transmits a holding list indicating that the data A to E are held, to the other communication terminals 110. The communication terminals 110-2 to 110-5 compare the holding list received from the communication terminal 110-1 with the holding lists of the own communication terminals, and respectively detect differences. Consequently, each of the communication terminals 110-2 to 110-5, again in the step S3, transmits and receives communication messages to and from the communication terminal 110-1 to perform data sharing again. As a result, as illustrated in Fig. 5, the communication terminal 110-2 acquires the data C, D, and E not present in the own communication terminal from the communication terminal 110-1. The communication terminal 110-3 acquires the data B, D, and E not present in the own communication terminal from the communication terminal 110-1. The communication terminal 110-4 acquires the data B, C, and E not present in the own communication terminal from the communication terminal 110-1. The communication terminal 110-5 acquires the data B, C, and D not present in the own communication terminal from the communication terminal 110-1. Consequently, all the communication terminals 110 can mutually share the data A to E.

Thus, according to the present exemplary embodiment, increase in bandwidth load on a wireless link caused by frequent transmission of holding lists can be suppressed. A reason for this is that only a communication terminal determined that the own communication terminal is a specified terminal transmits a holding list to other communication terminals.

Further, according to the present exemplary embodiment, a communication terminal (unspecified terminal) receiving a holding list from another communication terminal (specified terminal) transmits and receives communication messages to and from the communication terminal (specified terminal) that is a source of the holding list that does not match the holding list of the own communication terminal, so that the communication terminals share data with each other. Therefore, data can be shared by all communication terminals that are present within a range where communication with a communication terminal that transmits a holding list (specified terminal) is available.

### [Second Exemplary Embodiment]

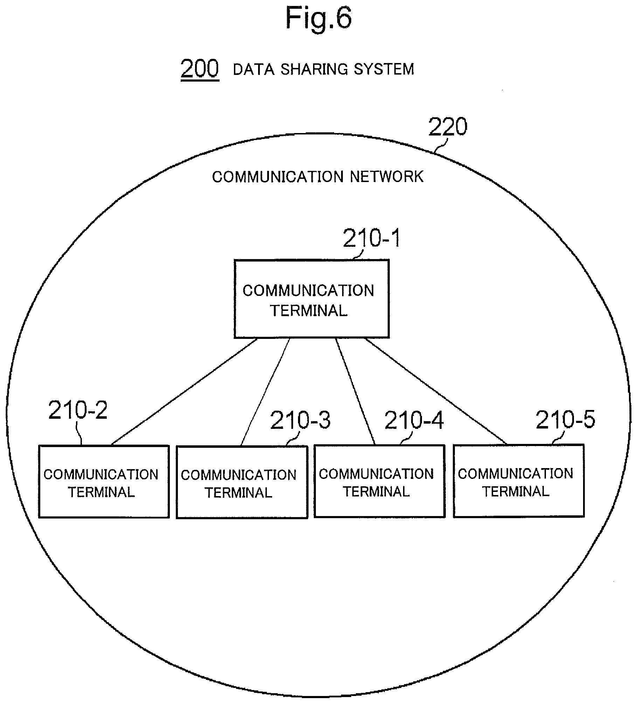

Referring to Fig. 6, in a data sharing system 200 according to a second exemplary embodiment of the present invention, a plurality of communication terminals 210 capable of wirelessly transmitting and receiving communication messages to and from one another form one communication network 220. As for the individual communication terminals 210, all of the terminals may be mobile communication terminals, or some of the terminals may be mobile communication terminals and the others may be fixed terminals. Although in Fig. 6 only five communication terminals are drawn, the number of communication terminals may be four or less, or may also be six or more.

The communication network 220 has a hierarchized network topology. In the present exemplary embodiment, the network topology is made up of two hierarchies, a parent and a child. Of the plurality of communication terminals 210 connected to the communication network 220, only one communication terminal 210 functions as a parent and all the remaining communication terminals 210 function as children. In the communication network 220, transmission and reception of communication messages between child communication terminals 210 are performed via the parent communication terminal 210. In other words, the parent communication terminal 210 functions as an access point.

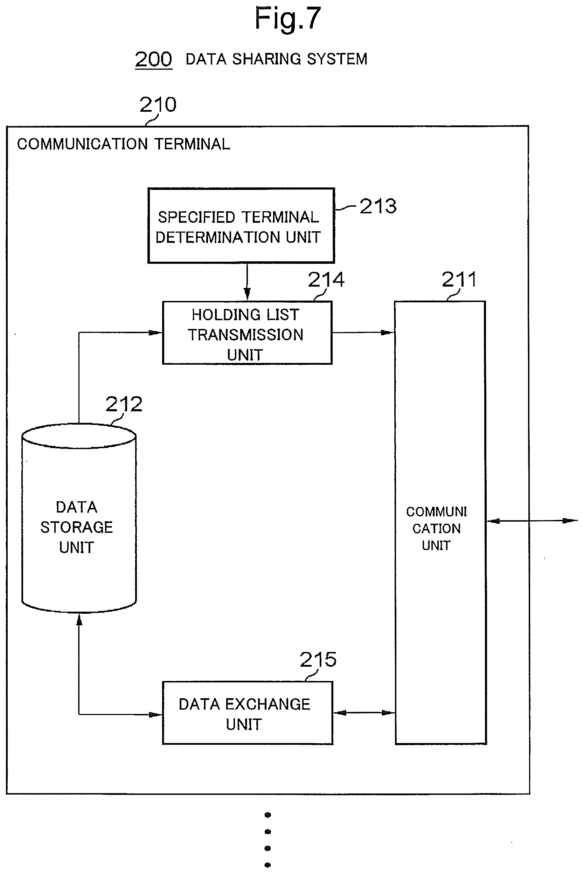

Fig. 7 illustrates a configuration example of a communication terminal 210. Referring to Fig. 7, the communication terminal 210 includes a communication unit 211, a data storage unit 212, a specified terminal determination unit 213, a holding list transmission unit 214, and a data exchange unit 215.

The data storage unit 212, the holding list transmission unit 214, and the data exchange unit 215 have the same functions as the data storage unit 112, the holding list transmission unit 114, and the data exchange unit 115, respectively, of the communication terminal 110 according to the first exemplary embodiment illustrated in Fig. 2.

The specified terminal determination unit 213 has a function of determining whether or not the own communication terminal 210 is the parent communication terminal in the communication network 220. The specified terminal determination unit 213 negotiates with other communication terminals 210 by transmitting and receiving communication messages to and from the other communication terminals 210 through the communication unit 211 as to whether or not the own communication terminal 210 is the parent communication terminal.

In response to a result of the aforementioned negotiation, the communication unit 211 controls whether a relay function of the own communication terminal 210 is enabled or disabled. Specifically, when the own communication terminal 210 is determined as the parent communication terminal, the communication unit 211 enables the relay function in order to make the own communication terminal 210 function as an access point.

The aforementioned communication network 220 and the aforementioned negotiation may be, for example, a network and a negotiation that conform to a Wi-Fi Direct® specification. In a network conforming to the Wi-Fi Direct specification, only one communication terminal among a plurality of communication terminals participating in the network is selected as a group owner and functions as an access point. Further, the aforementioned group owner is selected through a negotiation among the plurality of communication terminals participating in the network. However, a network and a negotiation in the present invention are not limited to a network and a negotiation that conform to a Wi-Fi Direct specification, but may also be another similar network and negotiation.

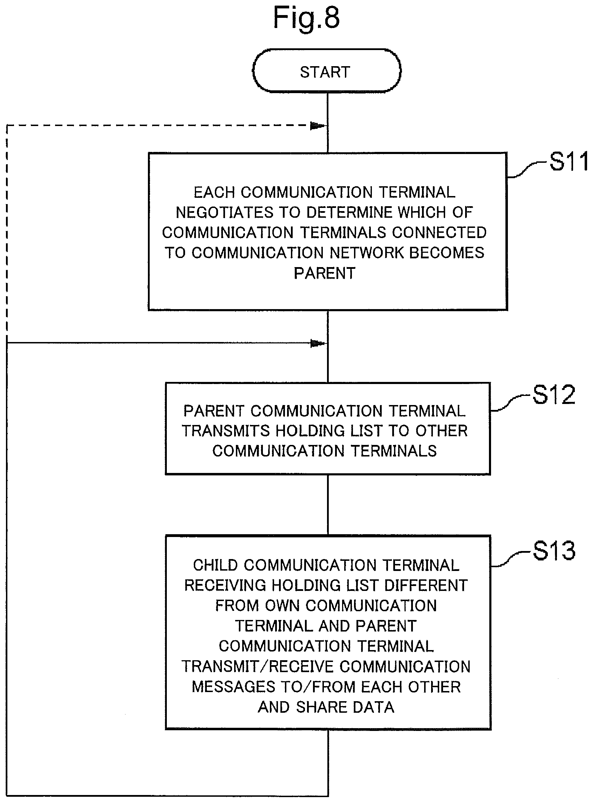

Next, in the data sharing system of the present exemplary embodiment, an operation in which a plurality of communication terminals 210 share data held in each of the communication terminals with one another will be described with reference to a flowchart in Fig. 8.

In case of data sharing is performed in the data sharing system 200, first, each communication terminal 210 negotiates, using the specified terminal determination unit 213, with other communication terminals 210 as to which of the communication terminals connected to the communication network 220 is determined as a parent (Step S11).

Next, the communication terminal 210 determined as a parent through the aforementioned negotiation transmits, using the holding list transmission unit 214, a holding list that lists information about data held by the own communication terminal, to child communication terminals 210 through the communication unit 211 (Step S12).

Next, a child communication terminal 210 receiving a holding list from the parent communication terminal 210 transmits and receives, using the data exchange unit 215, communication messages through the communication unit 211 to and from the parent communication terminal 210 holding a holding list that does not match the holding list of the own communication terminal, so as to share data with each other (Step S13).

Thereafter, the processing of the steps S12 to S13 is repeated. Alternatively, in a case that the parent communication terminal 210 departs from the communication network 220, or the like, the processing of the steps S11 to S13 may be repeated.

Based on the foregoing operation, a plurality of communication terminals 210 can share data.

Thus, according to the present exemplary embodiment, increase in bandwidth load on a wireless link caused by frequent transmission of holding lists can be suppressed. A reason for this is that, of all the communication terminals 210 connected to the communication network 220, the only one communication terminal that becomes a parent transmits a holding list to the child communication terminals.

Further, according to the present exemplary embodiment, each child communication terminal receiving a holding list from the parent communication terminal transmits and receives communication messages to and from the parent communication terminal having a holding list that does not match the holding list of the own communication terminal, so as to share data with each other. Therefore, data sharing among all the communication terminals connected to the communication network 220 is possible.

Furthermore, according to the present exemplary embodiment, since shared data exchange between the parent and child communication terminals is performed as a one-hop communication, increase in bandwidth load of wireless resource can be suppressed compared with a case that shared data exchange between child communication terminals is performed as a two-hop communication.

### [Third Exemplary Embodiment]

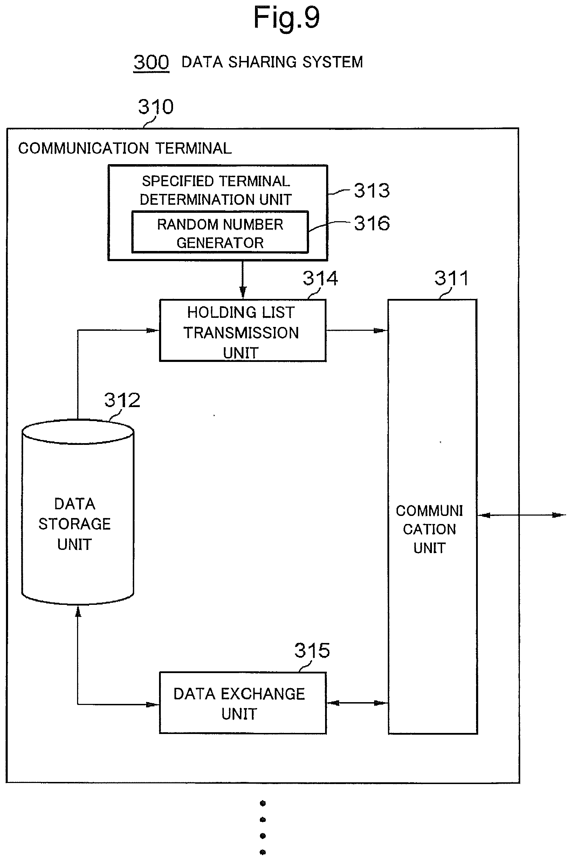

Referring to Fig. 9, a communication terminal 310 included in a data sharing system 300 according to a third exemplary embodiment of the present invention includes a communication unit 311, a data storage unit 312, a specified terminal determination unit 313, a holding list transmission unit 314, and a data exchange unit 315.

The communication unit 311, the data storage unit 312, the holding list transmission unit 314, and the data exchange unit 315 have the same functions as the communication unit 111, the data storage unit 112, the holding list transmission unit 114, and the data exchange unit 115, respectively, of the communication terminal 110 according to the first exemplary embodiment illustrated in Fig. 2.

The specified terminal determination unit 313 includes a random number generator 316, and has a function of determining whether or not the own communication terminal 310 is a specified terminal in accordance with a random number (pseudorandom number) generated by the random number generator 316. Specifically, in case of a random number generated by the random number generator 316 is included in a pre-determined range, the specified terminal determination unit 313 determines the own communication terminal 310 to be a specified terminal, otherwise to be an unspecified terminal. For example, the random number generator 316 generates random numbers that are uniformly distributed over an integer range of 0 to 9. The specified terminal determination unit 313 can classify 10 percent of a plurality of communication terminals as specified terminals and the remainder as unspecified terminals by means that the own communication terminal is determined to be a specified terminal if the generated random number is less than 1, otherwise to be an unspecified terminal. The aforementioned range may be either fixed or variable.

The configuration and operation of the communication terminal 310 other than the specified terminal determination unit 313 according to the present exemplary embodiment are the same as the communication terminal 110 according to the first exemplary embodiment.

Thus, according to the present exemplary embodiment, increase in bandwidth load on a wireless link caused by frequent transmission of holding lists can be suppressed. A reason for this is that, of all the communication terminals 310, only the communication terminals determined as specified terminals based on random numbers transmit holding lists to child communication terminals.

Further, according to the present exemplary embodiment, a communication terminal (unspecified terminal) receiving a holding list from another communication terminal (specified terminal) transmits and receives communication messages to and from the communication terminal (specified terminal) that is a source of the holding list that does not match the holding list of the own communication terminal, so that the communication terminals share data with each other. Therefore, data sharing between all the communication terminals present in a range of communication possible from the communication terminal (specified terminal) that transmits a holding list is possible.

In addition, by making the range to be compared with a generated random number variable, it is possible to easily change the percentage of a plurality of communication terminals to be determined as specified terminals.

### [Fourth Exemplary Embodiment]

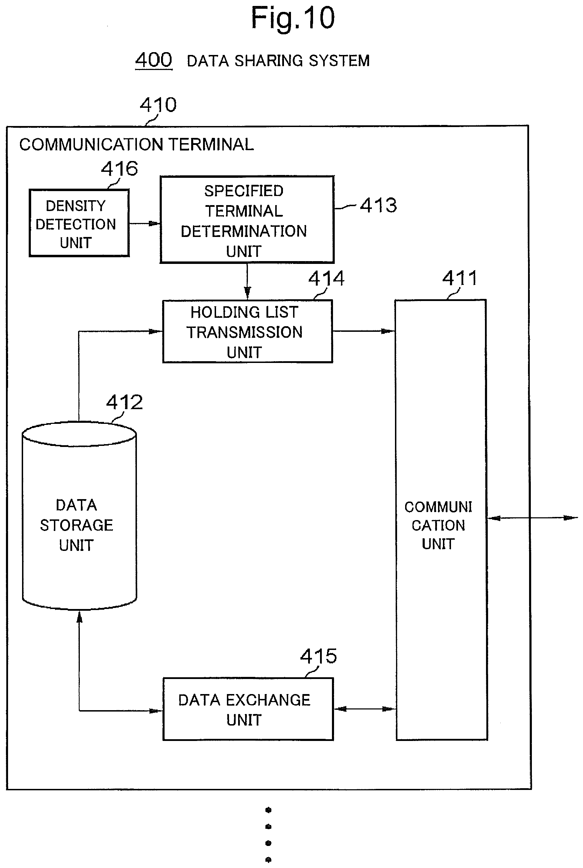

Referring to Fig. 10, a communication terminal 410 included in a data sharing system 400 according to a fourth exemplary embodiment of the present invention includes a communication unit 411, a data storage unit 412, a specified terminal determination unit 413, a holding list transmission unit 414, a data exchange unit 415, and a density detection unit 416.

The communication unit 411, the data storage unit 412, the holding list transmission unit 414, and the data exchange unit 415 have the same functions as the communication unit 111, the data storage unit 112, the holding list transmission unit 114, and the data exchange unit 115, respectively, of the communication terminal 110 according to the first exemplary embodiment illustrated in Fig. 2.

The density detection unit 416 has a function of detecting a density level of other communication terminals in the communication-available area of the own communication terminal 410. Choice of method for detecting a density level is arbitrary. For example, in case of each communication terminal 410 is connected to a network and transmits and receives communication messages to and from other communication terminals 410 via the network so that data sharing is carried out, the number of communication terminals connected to the network may be detected as a density level. For example, in a network conforming to a Wi-Fi Direct specification, there exists a phase of detecting communication terminals to be connected prior to negotiation for selecting a group owner. Therefore, the number of communication terminals detected in this phase can be utilized as a density level. Further, in case of each communication terminal 410 transmits a certain communication message to other communication terminals in a constant cycle, a ratio of a no-signal period during which no communication message is received per unit time has correlation with a density level. Therefore, the aforementioned no-signal period ratio can be utilized as a density level.

The specified terminal determination unit 413 has a function of determining whether or not the own communication terminal 410 is a specified terminal based on the density level detected by the density detection unit 416. Specifically, the specified terminal determination unit 413 determines the own communication terminal as a specified terminal unconditionally in case of the density level is less than or equal to a threshold value. Further, in case of the density level is not less than nor equal to the threshold value, the specified terminal determination unit 413 determines whether or not the own communication terminal is a specified terminal by using a method similar to the method used by the specified terminal determination unit 213 according to the second exemplary embodiment or the method used by the specified terminal determination unit 313 according to the third exemplary embodiment.

The configuration and operation of the communication terminal 410 other than the specified terminal determination unit 413 and the density detection unit 416 according to the present exemplary embodiment are the same as the communication terminal 110 according to the first exemplary embodiment.

Thus, according to the present exemplary embodiment, increase in bandwidth load on a wireless link caused by frequent transmission of holding lists can be suppressed. A reason for this is that in a situation where communication terminals are so densely populated that the density level exceeds the threshold value, only the communication terminals that are determined as specified terminals transmit holding lists to other communication terminals.

Further, according to the present exemplary embodiment, a communication terminal (unspecified terminal) receiving a holding list from another communication terminal (specified terminal) transmits and receives communication messages to and from the communication terminal (specified terminal) that is a source of the holding list that does not match the holding list of the own communication terminal, so that the communication terminals share data with each other. Therefore, data sharing between all the communication terminals present in a range of communication possible from the communication terminal (specified terminal) that transmits a holding list is possible.

Furthermore, according to the present exemplary embodiment, in a situation where communication terminals are not so populated that the density level does not exceed the threshold value, communication terminals that can transmit holding lists are not limited to a subset of the communication terminals, therefore data sharing between an arbitrary pair of communication terminals based on exchange of communication messages is possible.

### [Fifth Exemplary Embodiment]

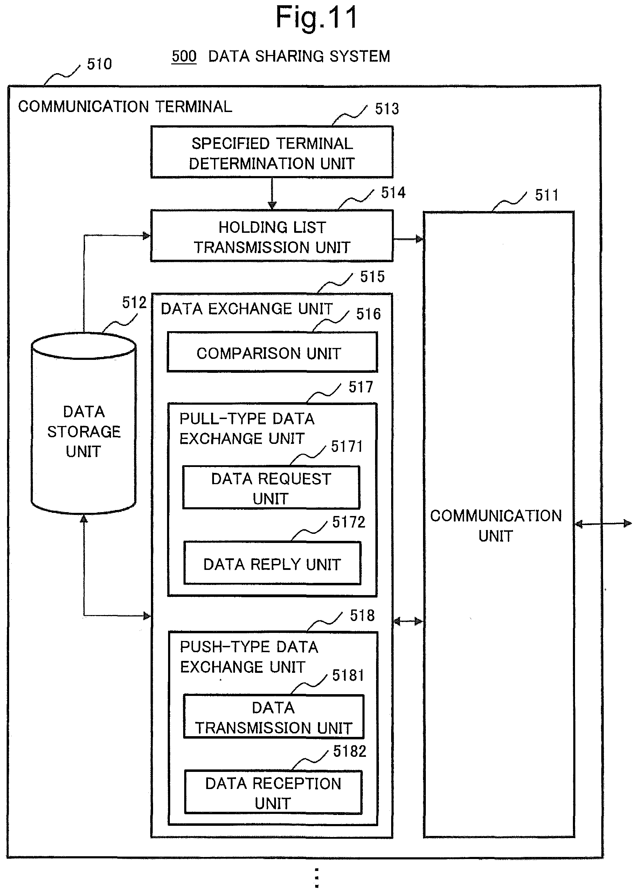

Referring to Fig. 11, a communication terminal 510 included in a data sharing system 500 according to a fifth exemplary embodiment of the present invention includes a communication unit 511, a data storage unit 512, a specified terminal determination unit 513, a holding list transmission unit 514, and a data exchange unit 515.

The communication unit 511, the data storage unit 512, the specified terminal determination unit 513, and the holding list transmission unit 514 have the same functions as the communication unit 111, the data storage unit 112, the specified terminal determination unit 113, and the holding list transmission unit 114, respectively, of the communication terminal 110 according to the first exemplary embodiment illustrated in Fig. 2. Alternatively, the communication unit 511, the data storage unit 512, the specified terminal determination unit 513, and the holding list transmission unit 514 have the same functions as the communication unit 211, the data storage unit 212, the specified terminal determination unit 213, and the holding list transmission unit 214, respectively, of the communication terminal 210 according to the second exemplary embodiment illustrated in Fig. 7. Alternatively, the communication unit 511, the data storage unit 512, the specified terminal determination unit 513, and the holding list transmission unit 514 have the same functions as the communication unit 311, the data storage unit 312, the specified terminal determination unit 313, and the holding list transmission unit 314, respectively, of the communication terminal 310 according to the third exemplary embodiment illustrated in Fig. 9. Alternatively, the communication unit 511, the data storage unit 512, the specified terminal determination unit 513, and the holding list transmission unit 514 have the same functions as the communication unit 411, the data storage unit 412, the specified terminal determination unit 413, and the holding list transmission unit 414, respectively, of the communication terminal 410 according to the fourth exemplary embodiment illustrated in Fig. 10.

The data exchange unit 515 has a function of transmitting and receiving communication messages through the communication unit 511 to and from another communication terminal 510 so as to share data with each other. The data exchange unit 515 includes a comparison unit 516, a pull-type data exchange unit 517, and a push-type data exchange unit 518.

The comparison unit 516 has a function of comparing a holding list received from another communication terminal 510 with a holding list of the own communication terminal and determining data to be acquired from the other communication terminal 510 and data to be provided for the other communication terminal 510.

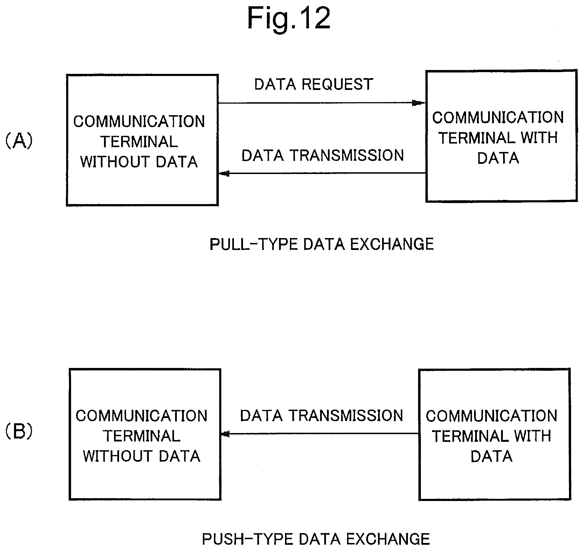

The pull-type data exchange unit 517, as illustrated in Fig. 12(A), has a function of data sharing between communication terminals by a method in which a communication terminal that does not hold data transmits a data request to a communication terminal that holds the data and the communication terminal that receives the data request transmits the data to the communication terminal that is the request source. The pull-type data exchange unit 517 includes a data request unit 5171 and a data reply unit 5172. The data request unit 5171 has a function of making a request for the data to be acquired determined by the comparison unit 516 to another communication terminal 510 through the communication unit 511, receiving, through the communication unit 511, the data transmitted through use of a communication message from the other communication terminal 510 in response to the request, and storing the data into the data storage unit 512. On the other hand, the data reply unit 5172 has a function of reading out data requested by the pull-type data exchange unit 517 of another communication terminal 510 by use of a communication message from the data storage unit 512 and transmitting the data to the other communication terminal 510 through the communication unit 511.

The push-type data exchange unit 518, as illustrated in Fig. 12(B), has a function of data exchange between communication terminals by a method in which a communication terminal holding data transmits the data to a communication terminal not holding the data, without a data request from the communication terminal. The push-type data exchange unit 518 includes a data transmission unit 5181 and a data reception unit 5182. The data transmission unit 5181 has a function of reading out the data to be provided determined by the comparison unit 516 from the data storage unit 512 and transmitting the data to another communication terminal 510 through the communication unit 511. On the other hand, the data reception unit 5182 has a function of storing, into the data storage unit 512, the data received through use of a communication message from the push-type data exchange unit 518 of another communication terminal 510.

Next, operations of the data sharing system 500 according to the present exemplary embodiment will be described. Of the operations of the data sharing system 500 according to the present exemplary embodiment, the operations other than the operation of the data exchange unit 515 are the same as the operations in the first to fourth exemplary embodiments. Hereinafter, the operation of the data exchange unit 515 will be described in detail.

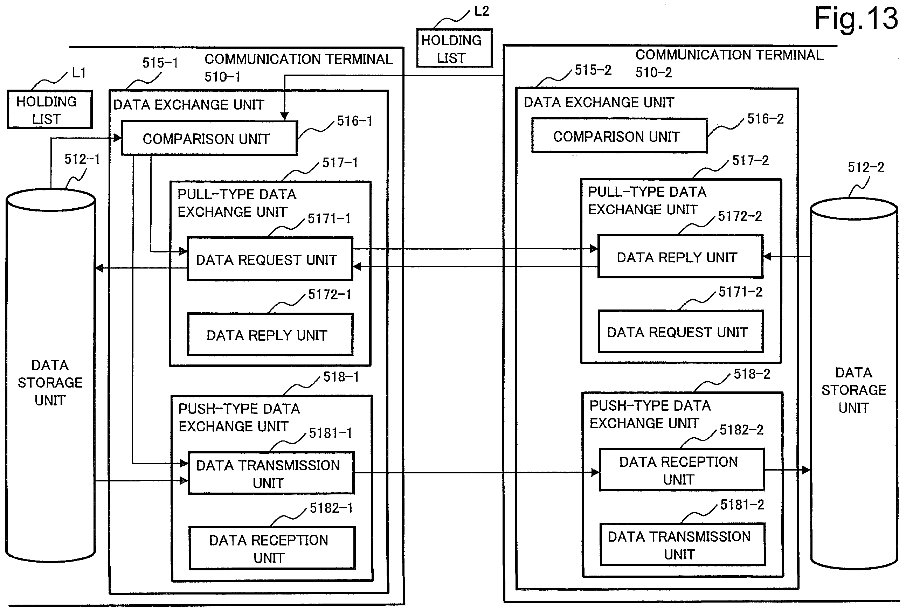

Fig. 13 is an explanatory diagram of a data exchange procedure performed between two communication terminals 510. In Fig. 13, a communication terminal 510-1 is a communication terminal that receives a holding list, and a communication terminal 510-2 is a communication terminal that is a source of the holding list.

A comparison unit 516-1 in a data exchange unit 515-1 on the communication terminal 510-1 side, when receiving a holding list L2 from the communication terminal 510-2, compares the holding list L2 with a holding list L1 in data stored in a data storage unit 512-1 of the own communication terminal. Then, in case of there are data listed in the holding list L2 that are not listed in the holding list LI, the comparison unit 516-1 determines the data to be data that need to be acquired from the communication terminal 510-2, and notifies the determination to a data request unit 5171-1 in a pull-type data exchange unit 517-1. Further, in case of there are data listed in the holding list L1 that are not listed in the holding list L2, the comparison unit 516-1 determines the data to be data that need to be provided for the communication terminal 510-2, and notifies the determination to a data transmission unit 5181-1 in a push-type data exchange unit 518-1.

The data request unit 5171-1 in the pull-type data exchange unit 517-1 on the communication terminal 510-1 side starts operation when a notification is received from the comparison unit 516. The data request unit 5171-1 first transmits a communication message that requests the data to be acquired from the communication terminal 510-2 to a pull-type data exchange unit 517-2 on the communication terminal 510-2 side. A data reply unit 5172-2 in the pull-type data exchange unit 517-2 analyzes the received communication message, reads out the requested data from a data storage unit 512-2, and transmits the data through use of a communication message to the pull-type data exchange unit 517-1 on the communication terminal 510-1 side which is a source of the request. The data request unit 5171-1 in the pull-type data exchange unit 517-1 takes out the data from the received communication message, and stores the data into the data storage unit 512-1.

Further, the data transmission unit 5181-1 in the push-type data exchange unit 518-1 on the communication terminal 510-1 side starts operation when a notification is received from the comparison unit 516. The data transmission unit 5181-1 reads out the data to be provided for the communication terminal 510-2 from the data storage unit 512-1, and transmits the data through use of a communication message to a push-type data exchange unit 518-2 on the communication terminal 510-2 side. A data reception unit 5182-2 in the push-type data exchange unit 518-2 on the communication terminal 510-2 side takes out the data from the received communication message, and stores the data into the data storage unit 512-2.

Thus, according to the present exemplary embodiment, an effect similar to the first to fourth exemplary embodiments is obtained, and data exchange can be efficiently carried out. A reason for this is that the data transmitted and received between communication terminals are limited to data to be shared between the communication terminals and there is no unnecessary operation that data not to be shared between communication terminals are transmitted and received between the communication terminals.

### [Sixth Exemplary Embodiment]

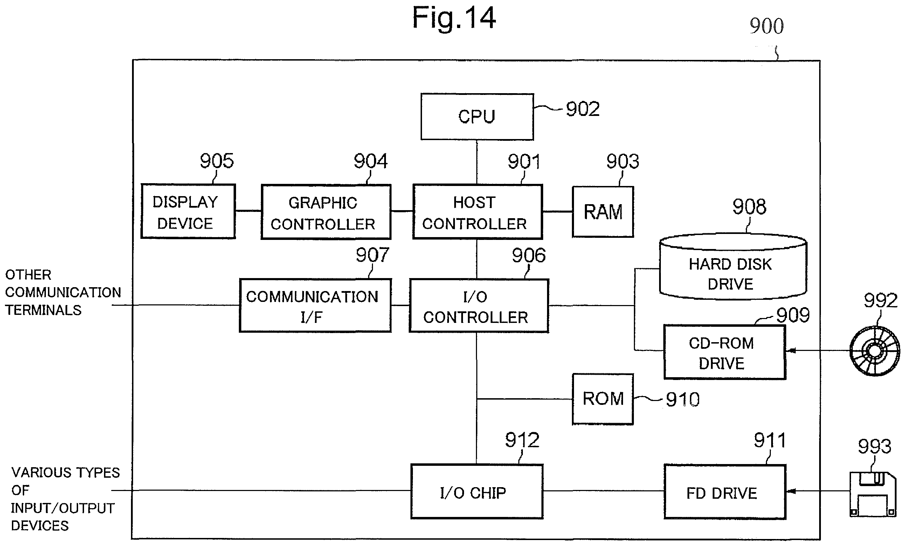

Fig. 14 illustrates an example of a hardware configuration in a case that a communication terminal in each of the foregoing exemplary embodiments is configured by an electronic information processing apparatus such as a computer. A communication terminal 900 in this example includes a CPU (Central Processing Unit) peripheral unit, an input/output unit, and a legacy input/output unit. The CPU peripheral unit includes a CPU 902, a RAM (Random Access Memory) 903, a graphic controller 904, and a display device 905 that are interconnected by a host controller 901. The input/output unit includes a communication interface 907, a hard disk drive 908, and a CD-ROM (Compact Disk Read Only Memory) drive 909 that are connected to the host controller 901 through an input/output controller 906. The legacy input/output unit includes a ROM (Read Only Memory) 910, a flexible disk drive 911, and an input/output chip 912 that are connected to the input/output controller 906.

The host controller 901 connects the RAM 903, the CPU 902 that accesses the RAM 903 at a high transfer rate, and the graphic controller 904. The CPU 902 operates to control each unit based on a program stored in the ROM 910 and the RAM 903. The graphic controller 904 acquires image data generated on a frame buffer provided within the RAM 903 by the CPU 902 and the like, and displays the image data on the display device 905. Alternatively, the graphic controller 904 may contain therein a frame buffer that stores image data generated by the CPU 902 and the like.

The input/output controller 906 connects the host controller 901 with the hard disk drive 908, which is a relatively high-speed input/output device, the communication interface 907, and the CD-ROM drive 909. The hard disk drive 908 stores a program and data that the CPU 902 uses. The communication interface 907 connects to another communication terminal 900 to transmit and receive a program or data. The CD-ROM drive 909 reads a program or data from a CD-ROM 992, and provides the program or data for the hard disk drive 908 and the communication interface 907via the RAM 903.

The ROM 910 and relatively low-speed input/output devices including the flexible disk drive 911 and the input/output chip 912, are connected to the input/output controller 906. The ROM 910 stores a boot program that the communication terminal 900 executes at the time of start-up, a programs that depends on hardware of the communication terminal 900, or the like. The flexible disk drive 911 reads a program or data from a flexible disk 993, and provides the program or data for the hard disk drive 908 and the communication interface 907 via the RAM 903. The input/output chip 912 connects the flexible disk drive 911, or various types of input/output devices via a parallel port, a serial port, a keyboard port, a mouse port, or the like.

The program that the CPU 902 executes is stored on a recording medium, such as the flexible disk 993, the CD-ROM 992, and an IC (Integrated Circuit) card, and provided to a user. The program stored on the recording medium may be compressed or non-compressed. The program is installed on the hard disk drive 908 from the recording medium, read out onto the RAM 903, and executed by the CPU 902. The program executed by the CPU 902 causes the communication terminal 900 to function as the communication unit, the data storage unit, the specified terminal determination unit, the holding list transmission unit, the data exchange unit, and the like in each of the aforementioned exemplary embodiments.

The program described above may be stored on an external storage medium. As for the storage medium, it is possible to use an optical recording medium, such as a DVD (Digital Versatile Disk) and a PD (Phase Disk), a magneto-optical recording medium, such as an MD (MiniDisk), a tape medium, a semiconductor memory such as an IC card, and the like besides the flexible disk 993 and the CD-ROM 992. Further, an information sharing system may be provided as a program acquired via a network, by using a storage medium, such as a hard disk and a RAM, provided in a server system connected to a dedicated communication network or the Internet, as a recording medium.

### [Other Exemplary Embodiments]

While the present invention has been described with reference to several exemplary embodiments, the present invention is not limited to the foregoing exemplary embodiments only, but various types of other additions and changes can be made. For example, exemplary embodiments as mentioned below are also included in the present invention.

As a method to determine whether or not a communication terminal itself is a specified terminal, a method utilizing a communication network topology, a method carrying out the determination through negotiation between communication terminals, and a method carrying out the determination by utilizing random numbers have been exemplified. However, other methods may also be utilized as a method to determine whether or not a communication terminal itself is a specified terminal. For example, a method in which a communication terminal is determined as a specified terminal if hardware performance (CPU performance, memory capacity, communication bandwidth, or the like) of the own communication terminal is higher than or equal to a threshold value, or the like may be used.

Further, as a method to determine whether or not a communication terminal itself is a specified terminal by utilizing a communication network topology, a method employed in a network that conforms to a Wi-Fi Direct specification has been exemplified. However, as a communication network topology, a network topology that is clustered into at least two or more hierarchies or a network topology to which a Connected Dominated Set is applied may be utilized.

The aforementioned embodiments of the present invention are meant to be examples. The present invention is only defined by the appended independent claims, and advantageous embodiments of the present invention are described in the dependent claims.

### [Industrial Applicability]

The present invention is applicable to a data sharing system that performs sharing of data, such as various types of content, between on-board communication terminals on vehicles such as automobiles, or between portable communication terminals.

### [Reference Signs List]

100 Data sharing system
110 Communication terminal
111 Communication unit
112 Data storage unit
113 Specified terminal determination unit
114 Holding list transmission unit
115 Data exchange unit

## Claims

1. A communication terminal (110) comprising:
a communication unit (111) that is configured to wirelessly transmit and receive communication messages to and from other communication terminals (110);
a data storage unit (112) that is configured to store one or more pieces of data;
a specified terminal determination unit (113) that is configured to determine whether or not the own communication terminal (110) is a specified terminal that is authorised to transmit a holding list;
a holding list transmission unit (114) that is configured to transmit, only in case the own communication terminal (110) is the specified terminal, the holding list that lists information about the data stored in the data storage unit (112) to the other communication terminals (110) through use of the communication messages;
and a data exchange unit (115) that is configured to receive another holding list from one of the other communication terminals (110), and transmit and receive the communication messages to and from the one of the other communication terminals (110), wherein the another holding list does not match the holding list of the own communication terminal, and wherein, through the communication messages and based on differences between the holding list and the another holding list, the own communication terminal and the one of the other communications terminals share data not stored in their data storage units,
wherein the specified terminal determination unit (113) is configured to determine whether or not the own communication terminal (110) is the specified terminal in accordance with whether or not the own communication terminal (110) functions as a relay terminal,
wherein the relay function of the own communication terminal is enabled in response to determining through negotiation between the communication terminals (110) that the own communication terminal is a parent node in a communication network to which the communication terminals are connected,
wherein the communication network is a network that has a hierarchical network topology, in which only one of the communication terminals (110) functions as a parent communication terminal and the remaining communication terminals function as child communication terminals, in which the transmission and reception of communication messages between child communication terminals are performed via the parent communication terminal, and in which communication terminals (110) that function as the relay terminals are limited to a subset of all communication terminals (110).

2. The communication terminal (110) according to Claim 1, wherein the communication unit (111) is connected to a network that conforms to a Wi-Fi Direct specification, and wherein one communication terminal (110) among a plurality of communication terminals (110) participating in the network conforming to the Wi-Fi direct specification is selected as a group owner and functions as an access point, and the group owner is selected through a negotiation among the plurality of communication terminals (110) participating in the network.

3. The communication terminal (110) according to any one of Claims 1 to 2, wherein the communication unit (111) conforms to a Wi-Fi Direct specification, and wherein one communication terminal (110) among a plurality of communication terminals (110) participating in a network conforming to the Wi-Fi direct specification, and to which the communication terminal is connected, is selected as a group owner and functions as an access point, and the group owner is selected through a negotiation among the plurality of communication terminals (110) participating in the network.

4. The communication terminal (110) according to Claim 1, wherein the communication terminal further (110) comprises
a density detection unit (416) that is configured to detect a density level that represents the number of other communication terminals (110) in a communication-available area of the own communication terminal (110), and wherein
the specified terminal determination unit (113) is further configured to unconditionally determine the own communication terminal (110) as the specified terminal in case of the detected density level is less than or equal to a threshold value.

5. The communication terminal (110) according to any one of Claims 1 to 4, wherein the data exchange unit (115, 515) comprises:
a comparison unit (516) that is configured to compare the another holding list received from the one of the other communication terminals (110) with the holding list of the own communication terminal (110) and determine data to be acquired from the one of the other communication terminals (110) and data to be provided to the one of the other communication terminals (110);
a first data exchange unit (517) including a data request unit (5171) that is configured to make a request for the data determined to be acquired from the one of the other communication terminals (110) through use of the communication messages, receive data transmitted through use of the communication messages from the one of the other communication terminals (110) in response to the request, and store the data into the data storage unit (112, 512), and a data reply unit (5172) that is configured to read out, from the data storage unit (112, 512), data requested by the one of the other communication terminals (110) and transmits the data to the one of the other communication terminals (110) through use of the communication messages; and
a second data exchange unit (518) including a data transmission unit (5181) that is configured to read out, from the data storage unit (112), the data determined to be provided and transmit the data to the one of the other communication terminals (110) through use of the communication messages, and a data reception unit (5182) that is configured to store data received from the one of the other communication terminals (110) through use of the communication messages into the data storage unit (112, 512).

6. A data sharing method for a communication terminal (110), comprising:
wirelessly transmitting and receiving, by a communication unit (111) of the communication terminal (110), communication messages to and from other communication terminals (110);
storing, by a data storage unit (112) of the communication terminal (110), one or more pieces of data;
determining, by a specified terminal determination unit (113) of the communication terminal (110), whether or not the own communication terminal (110) is a specified terminal that is authorised to transmit a holding list;
transmitting, by a holding list transmission unit (114) of the communication terminal (110), only in case the own communication terminal (110) is the specified terminal, the holding list that lists information about the data stored in the data storage unit (112) to the other communication terminals (110) through use of the communication messages; and
receiving, by a data exchange unit (115) of the communication terminal (110), another holding list from one of the other communication terminals (110), and transmitting and receiving the communication messages to and from the one of the other communication terminals (110), wherein the another holding list does not match the holding list of the own communication terminal, and wherein, through the communication messages and based on differences between the holding list and the another holding list, the own communication terminal and the one of the other communications terminals share data not stored in their data storage units,
wherein determining, by specified terminal determination unit (113) whether or not the own communication terminal (110) is the specified terminal is in accordance with whether or not the own communication terminal (110) functions as a relay terminal,
wherein the relay function of the own communication terminal is enabled in response of determining through negotiation between the communication terminals (110) that the own communication terminal is a parent node in a communication network to which the communication terminals are connected,
wherein the communication network is a network that has a hierarchical network topology, in which only one of the communication terminals (110) functions as a parent communication terminal and the remaining communication terminals function as child communication terminals, in which the transmission and reception of communication messages between child communication terminals are performed via the parent communication terminal, and in which communication terminals (110) that function as the relay terminals are limited to a subset of all communication terminals (110).

7. A system for sharing data, comprising a plurality of communication terminals (110) according to any one of Claims 1 to 5.

8. A program for causing a computer to function as:
a communication unit (111) that is configured to wirelessly transmit and receive communication messages to and from other communication terminals (110);
a data storage unit (112) that is configured to store one or more pieces of data;
a specified terminal determination unit (113) that is configured to determine whether or not the own communication terminal (110) is a specified terminal that is authorised to transmit a holding list;
a holding list transmission unit (114) that is configured to transmit, only in case the own communication terminal (110) is the specified terminal, the holding list that lists information about the data stored in the data storage unit (112) to the other communication terminals (110) through use of the communication messages; and
a data exchange unit (115) that is configured to receive another holding list from one of the othercommunication terminals (110), and transmit and receive the communication messages to and from the one of the other communication terminals (110), wherein the another holding list does not match the holding list of the own communication terminal, and wherein, through the communication messages and based on differences between the holding list and the another holding list, the own communication terminal and the one of the other communications terminals share data not stored in their data storage units,
wherein the specified terminal determination unit (113) is configured to determine whether or not the own communication terminal (110) is the specified terminal in accordance with whether or not the own communication terminal (110) functions as a relay terminal,
wherein the relay function of the own communication terminal is enabled in response of determining through negotiation between the communication terminals (110) that the own communication terminal is a parent node in a communication network to which the communication terminals are connected,
wherein the communication network is a network that has a hierarchical network topology, in which only one of the communication terminals (110) functions as a parent communication terminal and the remaining communication terminals function as child communication terminals, in which the transmission and reception of communication messages between child communication terminals are performed via the parent communication terminal, and in which communication terminals (110) that function as the relay terminals are limited to a subset of all communication terminals (110).

## Patentansprüche

1. Kommunikationsendgerät (110), das aufweist:
eine Kommunikationseinheit (111), die konfiguriert ist, um Kommunikationsnachrichten an andere Kommunikationsendgeräte (110) drahtlos zu übertragen und von diesen zu empfangen;
eine Datenspeichereinheit (112), die konfiguriert ist, um ein oder mehrere Datenelemente zu speichern;
eine spezifizierte Endgerätbestimmungseinheit (113), die konfiguriert ist, um zu bestimmen, ob das eigene Kommunikationsendgerät (110) ein spezifiziertes Endgerät ist, das berechtigt ist, eine Bestandsliste zu übertragen, oder nicht;
eine Bestandslistenübertragungseinheit (114), die konfiguriert ist, um nur in dem Fall, in dem das eigene Kommunikationsendgerät (110) das spezifizierte Endgerät ist, die Bestandsliste, die Informationen über die in der Datenspeichereinheit (112) gespeicherten Daten auflistet, unter Verwendung der Kommunikationsnachrichten an die anderen Kommunikationsendgeräte (110) zu übertragen;
und eine Datenaustauscheinheit (115), die konfiguriert ist, um eine andere Bestandsliste von einem der anderen Kommunikationsendgeräte (110) zu empfangen und die Kommunikationsnachrichten an das eine der anderen Kommunikationsendgeräte (110) zu übertragen oder von ihm zu empfangen, wobei die andere Bestandsliste nicht mit der Bestandsliste des eigenen Kommunikationsendgeräts (110) übereinstimmt, und wobei das eigene Kommunikationsendgerät und das eine der anderen Kommunikationsendgeräte durch die Kommunikationsnachrichten und basierend auf Unterschieden zwischen der Bestandsliste und der anderen Bestandsliste Daten, die nicht in ihren Datenspeichereinheiten gespeichert sind, gemeinsam nutzen,
wobei die spezifizierte Endgerätbestimmungseinheit (113) konfiguriert ist, um dementsprechend, ob das eigene Kommunikationsendgerät (110) als ein Relaisgerät arbeitet oder nicht, zu bestimmen, ob das eigene Kommunikationsendgerät (110) das spezifizierte Endgerät ist oder nicht,
wobei die Relaisfunktion des eigenen Kommunikationsendgeräts ansprechend auf die Bestimmung durch Verhandlung zwischen den Kommunikationsendgeräten (110), dass das eigene Kommunikationsendgerät ein übergeordneter Knoten in einem Kommunikationsnetzwerk, mit dem die Kommunikationsendgeräte verbunden sind, ist, aktiviert wird,
wobei das Kommunikationsnetzwerk ein Netzwerk ist, das eine hierarchische Netzwerktopologie hat, in der nur eines der Kommunikationsendgeräte (110) als ein übergeordnetes Kommunikationsendgerät arbeitet und die restlichen Kommunikationsendgeräte als untergeordnete Kommunikationsendgeräte arbeiten, wobei die Übertragung und der Empfang von Kommunikationsnachrichten zwischen untergeordneten Kommunikationsendgeräten über das übergeordnete Kommunikationsendgerät durchgeführt wird, und wobei Kommunikationsendgeräte (110), die als die Relaisgeräte arbeiten, auf eine Teilmenge aller Kommunikationsendgeräte (110) beschränkt sind.

2. Kommunikationsendgerät (110) nach Anspruch 1, wobei die Kommunikationseinheit (111) mit einem Netzwerk verbunden ist, das einer Wi-Fi-Direct-Spezifikation entspricht, und wobei ein Kommunikationsendgerät (110) von mehreren Kommunikationsendgeräten (110), die an dem Netzwerk, das einer Wi-Fi-Direct-Spezifikation entspricht, teilnehmen, als ein Gruppeneigentümer ausgewählt wird und als ein Zugangspunkt arbeitet, und wobei der Gruppeneigentümer durch eine Verhandlung zwischen den mehreren Kommunikationsendgeräten (110), die an dem Netzwerk teilnehmen, ausgewählt wird.

3. Kommunikationsendgerät (110) nach einem der Ansprüche 1 bis 2, wobei die Kommunikationseinheit (111) einer Wi-Fi-Direct-Spezifikation entspricht, und wobei ein Kommunikationsendgerät (110) von mehreren Kommunikationsendgeräten (110), die an einem Netzwerk teilnehmen, das einer Wi-Fi-Direct-Spezifikation entspricht und mit dem das Kommunikationsendgerät verbunden ist, als ein Gruppeneigentümer ausgewählt wird und als ein Zugangspunkt arbeitet, und wobei der Gruppeneigentümer durch eine Verhandlung zwischen den mehreren Kommunikationsendgeräten (110), die an dem Netzwerk teilnehmen, ausgewählt wird.

4. Kommunikationsendgerät (110) nach Anspruch 1, wobei das Kommunikationsendgerät (110) ferner aufweist:
eine Dichteerfassungseinheit (416), die konfiguriert ist, um einen Dichtepegel zu erfassen, der die Anzahl anderer Kommunikationsendgeräte (110) in einem Bereich verfügbarer Kommunikation des eigenen Kommunikationsendgeräts (110) erfasst, und wobei
die spezifizierte Endgerätbestimmungseinheit (113) ferner konfiguriert ist, um das eigene Kommunikationsendgerät (110) in dem Fall, dass der erfasste Dichtepegel kleiner oder gleich einem Schwellwert ist, bedingungslos als das spezifizierte Endgerät zu bestimmen.

5. Kommunikationsendgerät (110) nach einem der Ansprüche 1 bis 4, wobei die Datenaustauscheinheit (115, 515) aufweist:
eine Vergleichseinheit (516), die konfiguriert ist, um die andere Bestandsliste, die von dem einen der anderen Kommunikationsendgeräte (110) empfangen wird, mit der Bestandsliste des eigenen Kommunikationsendgeräts (110) zu vergleichen und Daten, die von dem einen der anderen Kommunikationsendgeräte (110) erlangt werden sollen, und Daten, die an das eine der anderen Kommunikationsendgeräte (110) bereitgestellt werden sollen, zu bestimmen;
eine erste Datenaustauscheinheit (517), die aufweist: eine Datenanforderungseinheit (1571), die konfiguriert ist, um eine Anforderung von Daten zu stellen, für die bestimmt wird, dass sie von dem einen der anderen Kommunikationsendgeräte (110) unter Verwendung der Kommunikationsnachrichten erlangt werden sollen, Daten, die unter Verwendung der Kommunikationsnachrichten von dem einen der anderen Kommunikationsendgeräte (110) ansprechend auf die Anforderung übertragen werden, zu empfangen und die Daten in die Datenspeichereinheit (112, 512) zu speichern, und eine Datenantworteinheit (5172), die konfiguriert ist, um aus der Datenspeichereinheit (112, 512) Daten auszulesen, die von dem einen der anderen Kommunikationsendgeräte (110) angefordert werden, und die Daten unter Verwendung der Kommunikationsnachrichten an das eine der anderen Kommunikationsendgeräte (110) überträgt; und
eine zweite Datenaustauscheinheit (518), die aufweist: eine Datenübertragungseinheit (5181), die konfiguriert ist, um aus der Datenspeichereinheit (112) die Daten auszulesen, deren Bereitstellung bestimmt wird, und die Daten unter Verwendung der Kommunikationsnachrichten an das eine der anderen Kommunikationsendgeräte (110) zu übertragen, und eine Datenempfangseinheit (5182), die konfiguriert ist, um Daten, die von dem einen der anderen Kommunikationsendgeräte (110) unter Verwendung der Kommunikationsnachrichten empfangen werden, in die Datenspeichereinheit (112, 512) zu speichern.

6. Gemeinsames Datennutzungsverfahren für ein Kommunikationsendgerät (110), das aufweist:
drahtloses Übertragen und Empfangen von Kommunikationsnachrichten an andere Kommunikationsendgeräte (110) und von diesen durch eine Kommunikationseinheit (111) des Kommunikationsendgeräts (110);
Speichern eines oder mehrerer Datenelemente durch eine Datenspeichereinheit (112) des Kommunikationsendgeräts (110);
Bestimmen, ob das eigene Kommunikationsendgerät (110) ein spezifiziertes Endgerät ist, das berechtigt ist, eine Bestandsliste zu übertragen, oder nicht, durch eine spezifizierte Endgerätbestimmungseinheit (113) des Kommunikationsendgeräts (110);
nur in dem Fall, in dem das eigene Kommunikationsendgerät (110) das spezifizierte Endgerät ist, Übertragen der Bestandsliste, die Informationen über die in der Datenspeichereinheit (112) gespeicherten Daten auflistet, unter Verwendung der Kommunikationsnachrichten an die anderen Kommunikationsendgeräte (110) durch die Bestandslistenübertragungseinheit (114) des Kommunikationsendgeräts (110); und
Empfangen einer anderen Bestandsliste von einem der anderen Kommunikationsendgeräte (110) durch die Datenaustauscheinheit (115) des Kommunikationsendgeräts (110) und Übertragen der Kommunikationsnachrichten an das eine der anderen Kommunikationsendgeräte (110) oder Empfangen von ihm, wobei die andere Bestandsliste nicht mit der Bestandsliste des eigenen Kommunikationsendgeräts (110) übereinstimmt, und wobei das eigene Kommunikationsendgerät und das eine der anderen Kommunikationsendgeräte durch die Kommunikationsnachrichten und basierend auf Unterschieden zwischen der Bestandsliste und der anderen Bestandsliste Daten, die nicht in ihren Datenspeichereinheiten gespeichert sind, gemeinsam nutzen,
wobei das Bestimmen, ob das eigene Kommunikationsendgerät (110) das spezifizierte Endgerät ist oder nicht, durch die spezifizierte Endgerätbestimmungseinheit (113) dementsprechend erfolgt, ob das eigene Kommunikationsendgerät (110) als ein Relaisgerät arbeitet oder nicht,
wobei die Relaisfunktion des eigenen Kommunikationsendgeräts ansprechend auf die Bestimmung durch Verhandlung zwischen den Kommunikationsendgeräten (110), dass das eigene Kommunikationsendgerät ein übergeordneter Knoten in einem Kommunikationsnetzwerk, mit dem die Kommunikationsendgeräte verbunden sind, ist, aktiviert wird,
wobei das Kommunikationsnetzwerk ein Netzwerk ist, das eine hierarchische Netzwerktopologie hat, in der nur eines der Kommunikationsendgeräte (110) als ein übergeordnetes Kommunikationsendgerät arbeitet und die restlichen Kommunikationsendgeräte als untergeordnete Kommunikationsendgeräte arbeiten, wobei die Übertragung und der Empfang von Kommunikationsnachrichten zwischen untergeordneten Kommunikationsendgeräten über das übergeordnete Kommunikationsendgerät durchgeführt wird, und wobei Kommunikationsendgeräte (110), die als die Relaisgeräte arbeiten, auf eine Teilmenge aller Kommunikationsendgeräte (110) beschränkt sind.

7. System zur gemeinsamen Datennutzung, das mehrere Kommunikationsendgeräte (110) nach einem der Ansprüche 1 bis 5 aufweist.

8. Programm, um zu bewirken, dass ein Computer arbeitet als:
eine Kommunikationseinheit (111), die konfiguriert ist, um Kommunikationsnachrichten an andere Kommunikationsendgeräte (110) drahtlos zu übertragen und von diesen zu empfangen;
eine Datenspeichereinheit (112), die konfiguriert ist, um ein oder mehrere Datenelemente zu speichern;
eine spezifizierte Endgerätbestimmungseinheit (113), die konfiguriert ist, um zu bestimmen, ob das eigene Kommunikationsendgerät (110) ein spezifiziertes Endgerät ist, das berechtigt ist, eine Bestandsliste zu übertragen, oder nicht;
eine Bestandslistenübertragungseinheit (114), die konfiguriert ist, um nur in dem Fall, in dem das eigene Kommunikationsendgerät (110) das spezifizierte Endgerät ist, die Bestandsliste, die Informationen über die in der Datenspeichereinheit (112) gespeicherten Daten auflistet, unter Verwendung der Kommunikationsnachrichten an die anderen Kommunikationsendgeräte (110) zu übertragen; und
eine Datenaustauscheinheit (115), die konfiguriert ist, um eine andere Bestandsliste von einem der anderen Kommunikationsendgeräte (110) zu empfangen und die Kommunikationsnachrichten an das eine der anderen Kommunikationsendgeräte (110) zu übertragen oder von ihm zu empfangen, wobei die andere Bestandsliste nicht mit der Bestandsliste des eigenen Kommunikationsendgeräts (110) übereinstimmt, und wobei das eigene Kommunikationsendgerät und das eine der anderen Kommunikationsendgeräte durch die Kommunikationsnachrichten und basierend auf Unterschieden zwischen der Bestandsliste und der anderen Bestandsliste Daten, die nicht in ihren Datenspeichereinheiten gespeichert sind, gemeinsam nutzen,
wobei die spezifizierte Endgerätbestimmungseinheit (113) konfiguriert ist, um dementsprechend, ob das eigene Kommunikationsendgerät (110) als ein Relaisgerät arbeitet oder nicht, zu bestimmen, ob das eigene Kommunikationsendgerät (110) das spezifizierte Endgerät ist oder nicht,
wobei die Relaisfunktion des eigenen Kommunikationsendgeräts ansprechend auf die Bestimmung durch Verhandlung zwischen den Kommunikationsendgeräten (110), dass das eigene Kommunikationsendgerät ein übergeordneter Knoten in einem Kommunikationsnetzwerk, mit dem die Kommunikationsendgeräte verbunden sind, ist, aktiviert wird,
wobei das Kommunikationsnetzwerk ein Netzwerk ist, das eine hierarchische Netzwerktopologie hat, in der nur eines der Kommunikationsendgeräte (110) als ein übergeordnetes Kommunikationsendgerät arbeitet und die restlichen Kommunikationsendgeräte als untergeordnete Kommunikationsendgeräte arbeiten, wobei die Übertragung und der Empfang von Kommunikationsnachrichten zwischen untergeordneten Kommunikationsendgeräten über das übergeordnete Kommunikationsendgerät durchgeführt wird, und wobei Kommunikationsendgeräte (110), die als die Relaisgeräte arbeiten, auf eine Teilmenge aller Kommunikationsendgeräte (110) beschränkt sind.

## Revendications

1. Terminal de communication (110) comprenant :
une unité de communication (111) qui est configurée pour émettre et recevoir sans fil des messages de communication vers et depuis d'autres terminaux de communication (110) ;
une unité de stockage de données (112) qui est configurée pour stocker un ou plusieurs éléments de données ;
une unité de détermination de terminal spécifié (113) qui est configurée pour déterminer si ledit terminal de communication (110) est ou n'est pas un terminal spécifié qui est autorisé à émettre une liste de détention ;
une unité d'émission de liste de détention (114) qui est configurée pour émettre, uniquement dans le cas où ledit terminal de communication (110) est le terminal spécifié, la liste de détention qui répertorie des informations sur les données stockées dans l'unité de stockage de données (112) vers les autres terminaux de communication (110) grâce à l'utilisation des messages de communication ;
et une unité d'échange de données (115) qui est configurée pour recevoir une autre liste de détention de l'un des autres terminaux de communication (110), et émettre et recevoir les messages de communication vers et depuis l'un des autres terminaux de communication (110), dans lequel l'autre liste de détention ne coïncide pas avec la liste de détention dudit terminal de communication, et dans lequel, grâce aux messages de communication et sur la base de différences entre la liste de détention et l'autre liste de détention, ledit terminal de communication et l'un des autres terminaux de communication partagent des données non stockées dans leurs unités de stockage de données,
dans lequel l'unité de détermination de terminal spécifié (113) est configurée pour déterminer si ledit terminal de communication (110) est ou n'est pas le terminal spécifié en accord avec le fait que ledit terminal de communication (110) fonctionne ou pas comme un terminal relais,
dans lequel la fonction de relais dudit terminal de communication est activée en réponse à la détermination grâce à une négociation entre les terminaux de communication (110) du fait que ledit terminal de communication est un noeud parent dans un réseau de communication auquel sont connectés les terminaux de communication,
dans lequel le réseau de communication est un réseau qui a une topologie de réseau hiérarchique, dans laquelle un seul des terminaux de communication (110) fonctionne comme un terminal de communication parent et les autres terminaux de communication fonctionnent comme des terminaux de communication enfants, dans laquelle l'émission et la réception de messages de communication entre les terminaux de communication enfants sont effectuées via le terminal de communication parent, et dans laquelle les terminaux de communication (110) qui fonctionnent comme les terminaux relais sont limités à un sous-ensemble de tous les terminaux de communication (110).

2. Terminal de communication (110) selon la revendication 1, dans lequel l'unité de communication (111) est connectée à un réseau qui se conforme à une spécification Wi-Fi Direct, et dans lequel un terminal de communication (110) parmi une pluralité de terminaux de communication (110) faisant partie du réseau se conformant à la spécification Wi-Fi Direct est sélectionné comme un propriétaire de groupe et fonctionne comme un point d'accès, et le propriétaire de groupe est sélectionné grâce à une négociation entre la pluralité de terminaux de communication (110) faisant partie du réseau.

3. Terminal de communication (110) selon l'une quelconque des revendications 1 et 2, dans lequel l'unité de communication (111) se conforme à une spécification Wi-Fi Direct, et dans lequel un terminal de communication (110) parmi la pluralité de terminaux de communication (110) faisant partie du réseau se conformant à la spécification Wi-Fi Direct, et auquel le terminal de communication est connecté, est sélectionné comme un propriétaire de groupe et fonctionne comme un point d'accès, et le propriétaire de groupe est sélectionné grâce à une négociation entre la pluralité de terminaux de communication (110) faisant partie du réseau.

4. Terminal de communication (110) selon la revendication 1, dans lequel le terminal de communication (110) comprend
une unité de détection de densité (416) qui est configurée pour détecter un niveau de densité qui représente le nombre d'autres terminaux de communication (110) dans une zone disponible pour la communication dudit terminal de communication (110), et dans lequel
l'unité de détermination de terminal spécifié (113) est en outre configurée pour déterminer de manière inconditionnelle ledit terminal de communication (110) comme étant le terminal spécifié dans le cas où le niveau de densité détecté est inférieur ou égal à une valeur de seuil.

5. Terminal de communication (110) selon l'une quelconque des revendications 1 à 4, dans lequel l'unité d'échange de données (115, 515) comprend :
une unité de comparaison (516) qui est configurée pour comparer l'autre liste de détention reçue de l'un des autres terminaux de communication (110) à la liste de détention dudit terminal de communication (110) et déterminer les données devant être acquises depuis l'un des autres terminaux de communication (110) et les données devant être fournies à l'un des autres terminaux de communication (110) ;
une première unité d'échange de données (517) comportant l'unité de requête de données (5171) qui est configurée pour établir une requête pour les données déterminées comme devant être acquises depuis l'un des autres terminaux de communication (110) grâce à l'utilisation des messages de communication, recevoir les données émises grâce à l'utilisation des messages de communication depuis l'un des autres terminaux de communication (110) en réponse à la requête, et stocker les données dans l'unité de stockage de données (112, 512), et une unité de réponse de données (5172) qui est configurée pour lire, à partir de l'unité de stockage de données (112, 512), des données requises par l'un des autres terminaux de communication (110) et émet les données vers l'un des autres terminaux de communication (110) grâce à l'utilisation des messages de communication ; et
une seconde unité d'échange de données (518) comportant une unité d'émission de données (5181) qui est configurée pour lire, à partir de l'unité de stockage de données (112), les données déterminées comme devant être fournies et émettre les données vers l'un des autres terminaux de communication (110) grâce à l'utilisation des messages de communication, et une unité de réception de données (5182) qui est configurée pour stocker les données reçues de l'un des autres terminaux de communication (110) grâce à l'utilisation des messages de communication dans l'unité de stockage de données (112, 512).

6. Procédé de partage de données pour un terminal de communication (110), comprenant :
émettre la réception sans fil, au moyen d'une unité de communication (111) du terminal de communication (110), de messages de communication vers et depuis d'autres terminaux de communication (110) ;
stocker, au moyen d'une unité de stockage de données (112) du terminal de communication (110), un ou plusieurs éléments de données ;
déterminer, au moyen d'une unité de détermination de terminal spécifié (113) du terminal de communication (110), le fait que ledit terminal de communication (110) est ou n'est pas un terminal spécifié qui est autorisé à émettre une liste de détention ;
émettre, par une unité d'émission de liste de détention (114) du terminal de communication (110), uniquement dans le cas où ledit terminal de communication (110) est le terminal spécifié, la liste de détention qui répertorie des informations sur les données stockées dans l'unité de stockage de données (112) vers les autres terminaux de communication (110) grâce à l'utilisation des messages de communication ; et
recevoir, au moyen d'une unité d'échange de données (115) du terminal de communication (110), une autre liste de détention de l'un des autres terminaux de communication (110), et émettre et recevoir des messages de communication vers et depuis l'un des autres terminaux de communication (110), dans lequel l'autre liste de détention ne coïncide pas avec la liste de détention dudit terminal de communication, et dans lequel, grâce aux messages de communication et sur la base de différences entre la liste de détention et l'autre liste de détention, ledit terminal de communication et l'un des autres terminaux de communication partagent des données non stockées dans leurs unités de stockage de données,
dans lequel la détermination, au moyen de l'unité de détermination de terminal spécifié (113) du fait que ledit terminal de communication (110) est ou n'est pas le terminal spécifié, est en accord avec le fait que ledit terminal de communication (110) fonctionne ou pas comme un terminal relais,
dans lequel la fonction de relais dudit terminal de communication est activée en réponse à la détermination grâce à une négociation entre les terminaux de communication (110) du fait que ledit terminal de communication est un noeud parent dans un réseau de communication auquel sont connectés les terminaux de communication,
dans lequel le réseau de communication est un réseau qui a une topologie de réseau hiérarchique, dans laquelle un seul des terminaux de communication (110) fonctionne comme un terminal de communication parent et les autres terminaux de communication fonctionnent comme des terminaux de communication enfants, dans laquelle l'émission et la réception de messages de communication entre les terminaux de communication enfants sont effectuées via le terminal de communication parent, et dans laquelle les terminaux de communication (110) qui fonctionnent comme les terminaux relais sont limités à un sous-ensemble de tous les terminaux de communication (110).

7. Système de partage de données, comprenant une pluralité de terminaux de communication (110) selon l'une quelconque des revendications 1 à 5.

8. Programme amenant un ordinateur à fonctionner comme :
une unité de communication (111) qui est configurée pour émettre et recevoir sans fil des messages de communication vers et depuis d'autres terminaux de communication (110) ;
une unité de stockage de données (112) qui est configurée pour stocker un ou plusieurs éléments de données ;
une unité de détermination de terminal spécifié (113) qui est configurée pour déterminer si ledit terminal de communication (110) est ou n'est pas un terminal spécifié qui est autorisé à émettre une liste de détention ;
une unité d'émission de liste de détention (114) qui est configurée pour émettre, uniquement dans le cas où ledit terminal de communication (110) est le terminal spécifié, la liste de détention qui répertorie des informations sur les données stockées dans l'unité de stockage de données (112) vers les autres terminaux de communication (110) grâce à l'utilisation des messages de communication ; et
une unité d'échange de données (115) qui est configurée pour recevoir une autre liste de détention de l'un des autres terminaux de communication (110), et émettre et recevoir les messages de communication vers et depuis l'un des autres terminaux de communication (110), dans lequel l'autre liste de détention ne coïncide pas avec la liste de détention dudit terminal de communication, et dans lequel, grâce aux messages de communication et sur la base de différences entre la liste de détention et l'autre liste de détention, ledit terminal de communication et l'un des autres terminaux de communication partagent des données non stockées dans leurs unités de stockage de données,
dans lequel l'unité de détermination de terminal spécifié (113) est configurée pour déterminer si ledit terminal de communication (110) est ou n'est pas le terminal spécifié en accord avec le fait que ledit terminal de communication (110) fonctionne ou pas comme un terminal relais,
dans lequel la fonction de relais dudit terminal de communication est activée en réponse à la détermination grâce à une négociation entre les terminaux de communication (110) du fait que ledit terminal de communication est un noeud parent dans un réseau de communication auquel sont connectés les terminaux de communication,
dans lequel le réseau de communication est un réseau qui a une topologie de réseau hiérarchique, dans laquelle un seul des terminaux de communication (110) fonctionne comme un terminal de communication parent et les autres terminaux de communication fonctionnent comme des terminaux de communication enfants, dans laquelle l'émission et la réception de messages de communication entre les terminaux de communication enfants sont effectuées via le terminal de communication parent, et dans laquelle les terminaux de communication (110) qui fonctionnent comme les terminaux relais sont limités à un sous-ensemble de tous les terminaux de communication (110).
